# EUROPÄISCHE PATENTSCHRIFT

(11) **EP 1 968 170 B1**
(45) Veröffentlichungstag und Bekanntmachung des Hinweises auf die Patenterteilung: **28.11.2012**
(21) Anmeldenummer: 08002504.2
(22) Anmeldetag: 12.02.2008
(51) Int. Cl.: H02K 11/04

(54) **Antriebseinheit insbesondere für Flurförderzeug**
Driving unit, in particular for an industrial truck
Unité d'entraînement, en particulier pour chariot de manutention

(30) Priorität: 03.03.2007 DE 102007010357
(43) Veröffentlichungstag der Anmeldung: 10.09.2008
(73) Patentinhaber: Jungheinrich Aktiengesellschaft, 22047 Hamburg (DE)
(72) Erfinder: Baginski, Ralf, 21398 Neetze (DE); Mänken, Frank, 24558 Henstedt-Ulzburg (DE)
(74) Vertreter: Hauck Patent- und Rechtsanwälte

(56) Entgegenhaltungen:
- EP-A2- 0 825 703
- DE-A1- 10 310 307
- DE-A1- 19 704 226
- JP-A- 3 239 142
- JP-A- 11 027 903
- JP-A- 11 164 521
- JP-A- 11 313 465
- SU-A1- 1 536 479

## Beschreibung

Die Erfindung bezieht sich auf eine Antriebseinheit insbesondere für Flurförderzeuge nach dem Patentanspruch 1.

Batteriebetriebene Flurförderzeuge weisen zumeist mindestens einen elektrischen Fahrmotor auf. Gegebenenfalls ist ein weiterer Motor für eine elektrische Lenkung vorgesehen sowie ein Elektromotor zum Antrieb einer Hydraulikpumpe. Die verwendeten Motoren sind zum Beispiel Asynchronmotoren, Synchronmotoren, bürstenlose Gleichstrommotoren, Reluktanzmotoren usw..

Da die Energiequelle eine Batterie ist und somit Gleichstrom bereitstellt, ist eine Umrichteranordnung erforderlich, um die Wechselstrom-Elektromotoren zu betreiben. In der vorliegenden Anmeldung wird die Umrichteranordnung als Steuerteil bezeichnet. Es ist bekannt, den Steuerteil für derartige Motoren außen am Gehäuse des Elektromotors anzubringen. Es ist jedoch auch bekannt, die Steuerteile mehr oder weniger in das Gehäuse der Elektromotoren zu integrieren. Wenn vorstehend eine Antriebseinheit gemeint ist, versteht sich, daß darunter entweder ein Elektromotor allein oder auch ein Elektromotor mit geeignetem Getriebe zu verstehen sind. Das Getriebe kann zum Beispiel innerhalb des Motorengehäuses angeordnet oder an das Motorengehäuse angeflanscht sein.

Sowohl Elektromotor als auch Steuerteil erzeugen im Betrieb Wärme, die in geeigneter Weise abgeführt werden müssen. Es ist bekannt, hierfür Lüfter einzusetzen. Der Elektromotor kann durch einen Zwangslüfter, der auf der Welle des Motors sitzt, gekühlt werden. Es ist jedoch auch bekannt, einen separaten Lüfter zu verwenden, um zum Beispiel sowohl den Elektromotor als auch das Steuerteil zu kühlen. Eine solche Anordnung ist aus EP 0 812 052 A1 bekannt geworden.

Aus JP 2005 198 393 ist auch bekannt geworden, den Stator eines Elektromotors mit sogenannten "Heatpipes" zu kühlen. Heatpipes enthalten eine Flüssigkeit unter Unterdruck, die bei einer Temperatur deutlich unter 100 °C siedet. Auf diese Weise wird ein hochwirksamer thermischer Leiter gebildet, um Wärme von einer Stelle zu einer anderen zu transportieren.

Antriebseinheiten für Flurförderzeuge sollen nach Möglichkeit so klein wie möglich bauen. Je größer die Leistungsdichte ist, umso größer ist das Kühlproblem.

Aus JP 11027903 A ist ein Elektromotor bekannt geworden, bei dem an die Stirnseite des Gehäuses Steuerteile angebracht sind. Die Gehäuse der Steuerteile und das Gehäuse des Elektromotors weisen Kühlrippen auf. Eine Haube erstreckt sich von einer Stirnseite teilweise über die Gehäuse der Steuerteile und enthält einen Lüfter. Die Kühlluft des Lüfters wird von der Haube über die Kühlrippen geleitet.

In SU 1536479 A1 ist außerhalb des Gehäuses eines Elektromotors ein separater Kühlkanal gezeigt, wobei zwischen dem Kühlkanal und dem Inneren des Gehäuses für den Elektromotor Heatpipes angeordnet sind. Der Motor treibt einen stirnseitig angeordneten Lüfter an, der Kühlluft durch den separaten Kanal fördert.

Der Erfindung liegt die Aufgabe zugrunde, eine Antriebseinheit, insbesondere für Flurförderzeuge, zu schaffen, die klein baut und eine hohe Leistungsdichte aufweist und gleichwohl eine wirksame Kühlung aufweist.

Diese Aufgabe wird durch die Merkmale des Patentanspruch 1 gelöst.

Bei der Erfindung sind Elektromotor und Steuerteil in einem gemeinsamen Gehäuse angeordnet. Es ist ein separater Kühlkanal, vorzugsweise außerhalb des Gehäuses, vorgesehen. Ein thermisch hochwirksamer Leiter, in Form von Heatpipes, ist zwischen dem Innern des Gehäuses und dem Kühlkanal zur Ableitung von Wärme über den Kühlkanal angeordnet.

Die Integration elektrischer Steuerungen in die Antriebsmotoren bringt neben der Platzeinsparung den Vorteil, daß Schnittstellen reduziert werden. Bei der erfindungsgemäßen Lösung wird trotz kompakter Antriebseinheit die Wärme wirksam abgeführt.

Nach einer Ausgestaltung der Erfindung ist die Heatpipe im Kühlkanal mit Kühlrippen versehen. Dadurch erfolgt eine wirksamere Übertragung der Wärme aus der Heatpipe auf den Kühlluftstrom im Kühlkanal. Im Kühlkanal kann ein Lüfter angeordnet werden.

Antriebseinheit und Kühlkanal sind vorzugsweise vertikal übereinander angeordnet. Dabei sorgt die Eigenkonvektion für eine ausreichende Luftströmung im daneben verlaufenden vertikalen Kühlkanal.

Üblicherweise ist zwischen Elektromotor und Steuerteil eine mechanische Verbindung erforderlich. Diese erfolgt bei der Erfindung über mindestens einen thermischen Isolator.

Die Heatpipes sind für den Elektromotor und das Steucrteil vorgesehen. Die Heatpipes sind so im Kühlkanal angeordnet, daß die Kühlluft zunächst an der Heatpipe für den Steuerteil vorbeigeführt wird.

Die Erfindung ist mit mehreren Vorteilen verbunden. Die Antriebseinheit kann äußerst kompakt ausgeführt werden. Der Kühlkanal kann effizient gestaltet werden, und ein Lüfter kann zwei Wärmequellen unterschiedlicher Temperatur kühlen. Die Dimensionierung der Kühlung gestaltet sich einfach.

Ein Ausführungsbeispiel der Erfindung wird nachfolgend anhand einer Zeichnung näher erläutert.

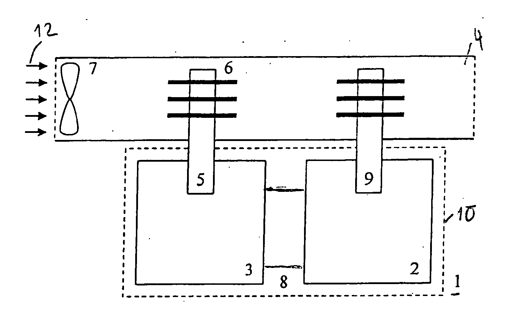

Die einzige Figur zeigt äußerst schematisch eine Antriebseinheit nach der Erfindung.

Eine Antriebseinheit 1 ist in einem gemeinsamen Gehäuse untergebracht. Sie weist zum Beispiel einen dreiphasigen Elektromotor 2 auf, zum Beispiel einen Asynchronmotor, Synchronmotor, bürstenloser Gleichstrommotor, Reluktanzmotor oder dergleichen. Dem Elektromotor kann ein Getriebe zugeordnet sein, was hier nicht gezeigt ist. Ein Steuerteil 3, der insbesondere einen Umrichter für den Elektromotor 2 enthält, um den Elektromotor 2 von einer nicht gezeigten Batterie zu speisen, ist über eine mechanische Verbindung 8 mit dem Elektromotor verbunden. Die Verbindung 8 ist ein thermischer Isolator.

Parallel zur Anordnung von Elektromotor 2 und Steuerteil 3 im Gehäuse 10 ist ein Kühlkanal 4 vorgesehen, an dessen linken Ende ein Lüfter 7 für eine Zwangsbelüftung vorgesehen ist. Der Lüfter 7 ist durch einen separaten Motor (nicht gezeigt) angetrieben.

Eine erste Heatpipe 5 ist in das Steuerteil 3 hineingeführt und erstreckt sich aus dem Gehäuse 10 heraus in den Kühlkanal 4. Eine zweite Heatpipe ist in den Motor 10 hineingeführt und erstreckt sich ebenfalls in den Kühlkanal 4. Im Bereich des Kühlkanals 4 weisen die Heatpipes 5, 9 Kühlrippen 6 auf. Die Kühlluft gemäß den Pfeilen 12 streicht zunächst an den Kühlrippen 6 der Heatpipe 5 entlang zur Heatpipe 9. Das heißt, die Heatpipe für den Steuerteil 3 wird zunächst gekühlt.

## Patentansprüche

1. Antriebseinheit für ein Flurförderzeug, mit einem Elektromotor (2) in einem Gehäuse, einem separaten Kühlkanal (4) außerhalb des Gehäuses, Lüftungsmittel für den Elektromotor, die einen Luftstrom am Kühlkanal erzeugen, mindestens einem hochwirksamen Wärmeleiter in Form von Heatpipes (5, 9) zwischen dem Kühlkanal (4) und dem Gehäuse zur Ableitung von Wärme aus dem Gehäuse über den Kühlkanal (4), **dadurch gekennzeichnet, dass** ein einen Frequenzumrichter enthaltendes Steuerteil (3) für den dreiphasigen Elektromotor (2) in dem Gehäuse (10) angeordnet ist, das Steuerteil (3) über eine mechanische, thermisch isolierende Verbindung (8) mit dem Elektromotor (2) verbunden ist, die Heatpipes (5, 9) zur Kühl des Elektromotors (2) und des Steuerteils (3) vorgesehen sind, wobei die Heatpipcs (5, 9) so angeordnet sind, dass die Kühlluft zunächst an die Heatpipes (5, 9) für das Steuerteil (3) vorbeigeführt wird.

2. Antriebseinheit nach Anspruch 1, dadurch gekenntzeichnet, dass die Heatpipe (5, 9) im Kühlkanal (4) mit Kühlrippen (6) versehen ist.

## Claims

1. Drive unit for an industrial truck comprising an electric motor (2) in a housing, a separate cooling channel (4) outside the housing, ventilation means for the electric motor for producing an air flow at the cooling channel, at least one highly effective heat conductor in the form of heat pipes (5, 9) between the cooling channel (4) and the housing for dissipating heat out of the housing via the cooling channel (4), **characterized in that**, a control unit (3) comprising a frequency converter for the three-phase electric motor (2) is arranged in the housing (10), the control unit (3) is coupled to the electric motor (2) via a mechanical, thermally isolating coupling (8), the heat pipes (5, 9) are provided for the cooling of the electrical motor (2) and the control unit (3), wherein the heat pipes (5, 9) are arranged so that the cooling air is at first guided along the heat pipes (5, 9) for the control unit (3).

2. Drive unit according to claim 1, **characterized in that** the heat pipes (5, 9) in the cooling channel (4) are provided with cooling fins (6).

## Revendications

1. Unité d'entraînement pour un chariot de manutention, comprenant un moteur électrique (2) dans un carter, un canal de refroidissement séparé (4) à l'extérieur du carter, des moyens de ventilation pour le moteur électrique qui produisent un courant d'air au niveau du canal de refroidissement, au moins un puissant thermoconducteur sous forme de caloducs (5, 9) entre le canal de refroidissement (4) et le carter pour dévier la chaleur du carter par le canal de refroidissement (4), **caractérisé en ce qu'**une partie de commande (3) contenant un convertisseur de fréquence pour le moteur électrique triphasé (2) est agencé dans le carter (10), la partie de commande (3) est reliée au moteur électrique (2) par une liaison mécanique thermiquement isolante (8), les caloducs (5, 9) sont prévus pour le refroidissement du moteur électrique (2) et de la partie de commande (3), les caloducs (5, 9) étant agencés de telle sorte que l'air de refroidissement est tout d'abord dirigé sur les caloducs (5, 9) pour la partie de commande (3).

2. Unité d'entraînement selon la revendication 1, **caractérisée en ce que** le caloduc (5, 9) est muni dans le canal de refroidissement (4) d'ailettes de refroidissement (6).
